# EUROPEAN PATENT SPECIFICATION

(11) **EP 3 526 054 B1**
(45) Date of publication and mention of the grant of the patent: **30.04.2025**
(21) Application number: 17809398.5
(22) Date of filing: 14.10.2017
(51) Int. Cl.: B42D 25/41, B42D 25/378

(54) **SECURITY DOCUMENT WITH A SECURING ELEMENT AND A METHOD FOR PRODUCING THEREOF**
SICHERHEITSDOKUMENT MIT EINEM SICHERUNGSELEMENT UND VERFAHREN ZUR HERSTELLUNG DAVON
DOCUMENT DE SÉCURITÉ À ÉLÉMENT DE FIXATION ET SON PROCÉDÉ DE FABRICATION

(30) Priority: 14.10.2016 PL 41911716
(43) Date of publication of application: 21.08.2019
(73) Proprietor: Polska Wytwornia Papierow Wartosciowych S.A., 00-222 Warszawa (PL)
(72) Inventor: BIERNACKI, Ariel, 03-193 Warszawa (PL); LESZCZYNSKA-AMBROZIEWICZ, Ewa, 05-200 Wolomin (PL); WÓJCIK, Pawel, 03-185 Warszawa (PL); KARPINSKI, Arkadiusz, 03-766 Warszawa (PL); WOJCIECHOWSKA, Agata, 01-059 Warszawa (PL); KAMINSKA, Iwona, 01-892 Warszawa (PL)
(74) Representative: Marcinska-Porzuc, Aleksandra
(86) International application number: PCT/PL2017/000102
(87) International publication number: WO 2018/070891

(56) References cited:
- EP-A1- 2 174 796
- EP-A1- 2 511 104
- WO-A1-2013/017738

## Description

### Field of the Invention

The invention relates to a security document with a securing element comprising a marking region made from a layer of an optically variable ink or from a layer of an optically variable ink with an addition of fluorescent pigments and/or dyes, subjected to marking by means of laser radiation, and a method for producing this security document with a securing element. Also, the invention relates to the securing element itself.

### State of the Art

Optically variable pigments may give unique effects. When applied in an ink or printed on banknotes or other valuable documents, they constitute an effective protection against scanning, photocopying, or counterfeiting. A product comprising an element printed with an optically variable ink is easy to be recognized, but, because of limited access to raw materials, it is difficult to produce and counterfeit.

There are many solutions enabling to mark valuable documents using an optically variable ink. A data carrier is known composed of many layers, wherein a layer with a locally applied and optically variable ink is situated on the external surface of the data carrier. In order to personalize, the optically variable ink is removed permanently using a laser, whereby a subsequent layer, that lies beneath, becomes visible. Both narrower elements, like letters or figures, as well as bigger signs may be removed. The optically variable ink may be applied onto a paper or polycarbonate substrate. The marking adopts the color of the exposed layer.

Another solution shows a valuable document, for example a banknote, having a lot of layers, including a marking layer comprising a mixture of various additives and/or pigments. The mixture contains components absorbing laser radiation as well as components that are transparent to laser radiation. The component that is transparent to laser radiation may contain optically variable pigments based on liquid crystals, whereas the component that absorbs the laser radiation is a component of the ink, the optical properties of which may be irreversibly changed by exposing to the laser radiation. Thus, it is possible that by irradiating with a laser, the absorbing layer will be removed within the irradiation area, whereas the layer, that is transparent to the given laser radiation and is situated above the absorbing layer, will be captured away therewith.

The main disadvantage of the solutions of this type available in the market today is that the marking process of an optically variable ink layer, for paper or polymer non-laminated substrates, is often performed by the total removal the ink layer. When, in turn, removing a layer of an optically variable ink totally, when carrying out the marking process of a laminated product, the structure of the document may be impaired or damaged.

Moreover, in known solutions the layer of an optically variable ink is not the only layer subjected to the marking process. This layer is accompanied by other layers, transparent or absorbing for the laser radiation, that are subjected to the marking process too. Furthermore, in known solutions, in a single ink layer that contains optically variable pigments, additionally, liquid crystal pigments are present - transparent to laser radiation. Moreover, the above described markings can not be performed after the lamination process of the layers of a security document.

Document EP 2 174 796 A1 discloses a laminated security document.

### Summary

There is no known, so far, process for marking optically variable inks containing fluorescent pigments and/or dyes, characterized by a change of optical properties both in the visible radiation and in the ultraviolet radiation, wherein, depending on the used laser radiation, one obtains an increase or a decrease of the fluorescence of the marked region.

Therefore, the aim of the invention is to change the visual perception of a securing element having the form of a laser marking printed with an optically variable ink or an optically variable ink with an addition of fluorescent pigments and/or dyes, using laser radiation, without total destruction of the ink layer within the marking region on the security document, the substrate of which may be made from paper, polyvinyl chloride, polycarbonate, polyester (PETG) or another polymer material. The used layer of the optically variable ink or the optically variable ink with the addition of fluorescent pigments and/or dyes, does not contain, for example, any liquid crystal pigments and constitutes a separate layer that may be subjected to a marking process with a perceivable visual effect when observing under the visible light as well as when observing under the ultraviolet light. Moreover, the aim of the invention is to deliver a method for marking a security document that makes it possible to perform the marking both before as well as after the lamination process.

These aims are achieved with a security document and a method, having features stated in the independent claims.

A laminated security document according to the invention has been defined in claim 1.

The marking region is situated on a substrate or on a coating layer situated on the substrate.

Preferably, the ratio by weight of the optically variable pigments to the fluorescent pigments and/or dyes within the marking region is at least 3:1, preferably 5:1.

Preferably, the laser marking is recognizable by a visible decrease of the fluorescence intensity of the fluorescent pigments and/or dyes when illuminating the laser marking with the ultraviolet light. Preferably, for the laser marking, the laser radiation is used of a wavelength in the range from 150 to 380 nm, preferably of a wavelength of 355 nm. Moreover preferably, the laser marking is recognizable by a visible increase of the fluorescence intensity of the fluorescent pigments and/or dyes when illuminating the laser marking with the ultraviolet light. Preferably, for the laser marking, the laser radiation is used of a wavelength in the range from 780 to 1400 nm, preferably of a wavelength of 1062 nm or 1064 nm, or the laser radiation is used of a wavelength in the range from 430 to 700 nm, preferably of a wavelength of 532 nm.

Preferably, the laser marking is composed of at least two laser markings of different or the same intensities of the light emission from the fluorescent pigments and/or dyes under the ultraviolet light.

Moreover preferably, the security document comprises a lenticular element that is located on the surface of the coating layer, and the marking region is situated entirely or locally below the lenticular element within the structure of the coating layer.

Preferably, the substrate and/or the coating layer is made from polycarbonate or polyester or PVC, or derivatives thereof.

Moreover preferably, the security document comprises a second marking in the laminate region, in which there is no marking region. The laser marking is visually recognizable due to an irreversible change of interference properties of the layer of the printing ink caused by a laser beam, whereas the second marking is visually recognizable due to a local change of the color of the security document, caused by the same laser beam. Thereby, the second marking adopts a third color different than the marking region and/or the laser marking. The second marking constitutes a visual unity together with the laser marking.

A laminated security document, not according to the invention, with a securing element located locally or on the whole surface of the security document, at least one coating layer being deposited onto the securing element, comprises a marking region composed of at least one printing ink layer containing optically variable interference pigments and free of additives changing the absorption spectrum of the printing ink layer, the marking region comprising a laser marking applied by laser radiation, the laser marking being visually recognizable basing on an irreversible change of interference properties of the printing ink layer containing optically variable interference pigments and transformation, within the laser marking, of an original color demonstrating a change dependent on the observation angle into another color demonstrating no change dependent on the observation angle, wherein for producing the laser marking the laser radiation is used of a wavelength in the range from 300 to 380 nm, preferably of a wavelength of 355 nm.

The marking region is situated on a substrate or on a coating layer situated on the substrate.

The security document comprises a lenticular element that is located on the surface of the coating layer, and the marking region is located entirely or locally below the lenticular element within the structure of the coating layer.

The substrate and/or the coating layer is made from polycarbonate or polyester or PCV, or derivatives thereof.

The security document comprises a second marking in the laminate region, in which there is no marking region. The laser marking is visually recognizable due to an irreversible change of interference properties of the printing ink layer caused by a laser beam, whereas the second marking is visually recognizable due to a local change of the color of the security document, caused by the same laser beam. Thereby, the second marking adopts a third color different than the marking region and/or the laser marking. The second marking constitutes a visual unity together with the laser marking.

Furthermore, the invention relates to a method according to claim 9.

Preferably, the ratio by weight of the optically variable pigments to the fluorescent pigments and/or dyes within the marking region is at least 3:1, preferably 5:1.

Preferably, when illuminating the laser marking with the ultraviolet light, a decrease of the fluorescence intensity of the fluorescent pigments and/or dyes is visible. For producing the laser marking, the laser radiation is used of a wavelength in the range from 150 to 380 nm, preferably of a wavelength of 355 nm.

Preferably, when illuminating the laser marking with the ultraviolet light, an increase of the fluorescence intensity of the fluorescent pigments and/or dyes is visible. For the laser marking, the laser radiation is used of a wavelength in the range from 780 to 1400 nm, preferably of a wavelength of 1062 nm or 1064 nm or the laser radiation is used of a wavelength in the range from 430 to 700 nm, preferably of a wavelength of 532 nm.

Preferably, while irradiating the marking region with a laser beam, a laser marking is produced composed of at least two laser markings demonstrating different or the same intensities of the light emission from the fluorescent pigments and/or dyes under the ultraviolet light.

Preferably, an additional step d) is possible, wherein a lenticular element is produced in the coating layer during the laminating step, that is located locally or entirely above the marking region.

Preferably, when irradiating the marking region with a laser beam, a laser marking is produced and, cumulatively, a second marking is produced in the laminate region during this irradiation step using the same laser beam of the same parameters. Alternatively, the operating parameters of the laser, producing the laser marking and the second marking in the laminate region, are different.

Not according to the invention, a method for producing a security document with a securing element comprises steps of:
a) applying onto the security document, locally or on the whole surface, a marking region composed of at least one printing ink layer containing optically variable interference pigments and free of additives changing the absorption spectrum of the printing ink layer;
b) applying at least one coating layer onto the marking region;
c) laminating the security document with the marking region and at least one coating layer;
e) marking the marking region of the security document by irradiating it with laser radiation and destroying the color changing effect of the at least one laser marking by irreversibly changing the interference properties of the printing ink layer containing optically variable interference pigments, located within the laser marking and by transforming, within the laser marking, an original color demonstrating a change dependent on the observation angle into another color demonstrating no change dependent on the observation angle, wherein for producing the laser marking the laser radiation is used of a wavelength in the range from 300 to 380 nm, preferably of a wavelength of 355 nm.

Not according to the invention, while irradiating the marking region with a laser beam a laser marking is produced and, cumulatively, a second marking is produced in the laminate region during this irradiation step using the same laser beam of the same parameters. Alternatively, the operating parameters of the laser, producing the laser marking and the second marking in the laminate region, are different.

The marking region is applied onto the substrate or a coating layer.

Not according to to the invention, an additional step d) is possible, wherein a lenticular element is produced in the coating layer during the laminating step, that is located locally or entirely above the marking region.

Not claimed by the invention is a securing element comprising a marking region composed of at least one printing ink layer containing optically variable interference pigments and fluorescent pigments and/or dyes and free of additives changing the absorption spectrum of the printing ink layer on the security document placed on a laminated substrate, having features as described above. Also, the invention relates to a securing element comprising a marking region composed of at least one printing ink layer containing optically variable interference pigments and free of additives changing the absorption spectrum of the printing ink layer on the security document placed on a laminated substrate having features as described above.

### Brief description of the drawings

The present invention will be more clear and more fully appreciated basing on the following detailed description read in reference to the drawings, in which:
- Fig. 1: shows a diagram of a security document having a non-laminated and laminated substrate, according to an exemplary embodiment of the present invention with a securing element;
- Fig. 2a- d:: shows a diagram of a laminated security document, according to an exemplary embodiment of the present invention with a securing element before and after the marking process;
- Fig. 3: shows a cross-sectional view of a non-laminated substrate before the marking process;
- Fig. 4: shows a cross-sectional view of a non-laminated substrate after the marking process;
- Fig. 5: shows a cross-sectional view of a non-laminated substrate before the marking process in an optically variable ink containing fluorescent additives;
- Fig. 6: shows a cross-sectional view of a non-laminated substrate after the marking process in an optically variable ink containing fluorescent additives;
- Fig. 7: shows a schematic cross-sectional view of a laminated substrate before the lamination process and before the marking process in an optically variable ink;
- Fig. 8: shows a cross-sectional view of a laminated substrate after the marking process in an optically variable ink;
- Fig. 9: shows a diagram of a laminated security document comprising a laser marking and a second marking;
- Fig. 10: shows a cross-sectional view of a laminated security document before the marking process in an optically variable ink containing fluorescent additives;
- Fig. 11: shows a schematic cross-sectional view of a laminated substrate before the lamination process and before the marking process in an optically variable ink containing fluorescent additives;
- Fig. 12: shows a cross-sectional view of a laminated substrate before the marking process in an optically variable ink containing fluorescent additives;
- Fig. 13: shows a cross-sectional view of a laminated security document after the marking process in an optically variable ink containing fluorescent additives;
- Fig. 14: shows a diagram of a laminated security document comprising a laser marking produced in an optically variable ink containing fluorescent additives and a second marking when observing under the visible light;
- Fig. 15: shows a diagram of a marking of a laminated security document comprising a laser marking produced in an optically variable ink using, simultaneously, lasers of different wavelengths (the result for the visible light, 15b, and for the ultraviolet light, 15c);
- Fig. 16: shows a cross-sectional view of a laminated security document before the marking process in an optically variable ink with a lenticular element;
- Fig. 17: shows a cross-sectional view of a laminated security document after the marking process in an optically variable ink with a lenticular element;
- Fig. 18: shows a diagram of a laminated security document with a lenticular element when observing at different angles;
- Fig. 19: shows a cross-sectional view of a laminated security document after the marking process in an optically variable ink containing fluorescent additives with a lenticular element;
- Fig. 20: shows a diagram of a laminated security document with a lenticular element when observing at different angles of Fig. 19.

The following description presents examples of realizing a method, a security document, and a securing element comprising a marking region in the form of an optically variable ink containing an addition of fluorescent pigments and/or dyes or a pure optically variable ink layer, free of additives changing the absorption spectrum of the printing ink layer in order to adjust the absorption spectrum to the wavelength of the used laser, without which the marking would not be possible, and a laser marking, in which, after irradiating with laser radiation, the color changing effect is destroyed and the intensity of the fluorescence of the marking region and/or laser marking is changed, the method being possible to perform both before the lamination process as well as after the lamination process. However, it should be stressed that the described examples in no way are intended to limit the scope of the protection and are given merely to illustrate one of many possible applications of the present invention. The present invention is applicable everywhere where one needs to produce a marking in a layer of an optically variable ink or in a layer of an optically variable ink with fluorescent pigments and/or dyes on a non-laminated substrate as well as after the lamination process.

### Detailed description

In one embodiment, a security document has a form and a format of a card, such as an ID card. In alternative embodiments, the security document may be another data carrier such as chip cards, smart cards, personal documents, driving license, checks, tickets as well as other valuable and security documents and data carriers being a safe medium for information storage.

The non-laminated substrate is a material free of external protective layers, for example, it may be a paper substrate, a paper-like substrate, and/or z paper-derivative materials, such as teslin, as well as any of polymer substrate, including polycarbonate (PC) and/or PVC (polyvinyl chloride) and/or polyester (e.g., polyethylene terephthalate (PET)), and/or polyolefins, e.g., polyetylene (PE), polypropylene (PP) and/or acrylonitrile and butadiene/styrene copolymer, ABS and/or polyuretane (PU) and/or polyether ether ketone (PEEK) (copolymer).

The laminated substrate and the coating layer in the sense of the present invention is a layer that is composed of polycarbonate (PC), polyvinyl chloride (PVC) and/or polyester (e.g., polyethylene terephthalate (PET) and, optionally, combinations thereof.

A security document 100 according to the invention, has various security features. The security features are elements that increase the safety against counterfeiting the security document. For example, a personalization 104 is applied onto the security document 100, as a photograph of the owner of the security document 100. Furthermore, personal data (not shown) of the owner of the security document 100 may be printed, preferably by means of laser printing or engraving performed in a layer of the security document 100 that is laser active or sensitive. Also, the security document 100 may comprise electronic components such as an RFID transponder, chip modules, antennae for dual-interface modules, or a hologram element. However, the above mentioned security features are not shown in the figures, because they do not constitute the subject matter of the present invention. The security document 100 comprises a securing element 101 comprising a marking region into which a laser marking has been introduced. The marking region may extend over the entire surface or on only a portion of the security document 100. The marking region may adopt any form: an alphanumeric character, a microtext, a line, a geometrical shape, a bitmap picture, a geometrical form, a figure, a letter, a picture, or a combination thereof. Also, the laser marking may adopt any form: an alphanumeric character, a microtext, a line, a geometrical shape, a bitmap picture, a geometrical form, a figure, a letter, a picture, or a combination thereof. The marking region and the laser marking may be evaluated both visually as well as automatically. The visual evaluation is performed with the naked eye.

According to the present invention, a laser sensitive marking region is a layer of a material exhibiting an optically variable effect. This material is a printing ink containing optically variable interference pigments or containing optically variable pigments and an additive of fluorescent pigments and/or dyes.

The printing ink containing optically variable interference pigments, according to the present invention, is for example an optically variable ink such as SICPA OVI^{®} Gold to Green, Magneta to Green, Green to Blue, Green to Magenta, Gold to Blue, SICPASTAR^{®} Turquoise to Purple, Pink to Green, Blue to Purple, Lilac to Olive, an optically variable ink such as SICPA OVMI^{®} Gold to Green, Magenta - Green, Green - Blue, and the Gold - Green ink based on a pigment from Zhuhai Qun Wang Technology Co. However, the present invention is not limited to these inks, but on the contrary, it may be realized with any printing ink containing optically variable interference pigments, free of additives changing the absorption spectrum of the binder of the printing ink layer in order to adjust the absorption spectrum to the wavelength of the used laser without which the marking would not be possible, or with a printing ink containing optically variable interference pigments with an addition of fluorescent pigments and/or dyes.

According to the present invention, optically variable pigments contained in the printing ink applied onto the marking region function independently and no other additives are needed that change the absorption spectrum of the printing ink layer, for example liquid crystal pigments or additional binding agents, for example based on polycarbonates or other thermoplastic polymers. Thus, it is possible to employ different optically variable inks or optically variable inks with an addition of fluorescent pigments and/or dyes, the media of which are various organic substances. When lamination is included, there is no need for the binding of the optically variable ink or the optically variable ink with an addition of fluorescent pigments and/or dyes to exhibit affinity to polycarbonate.

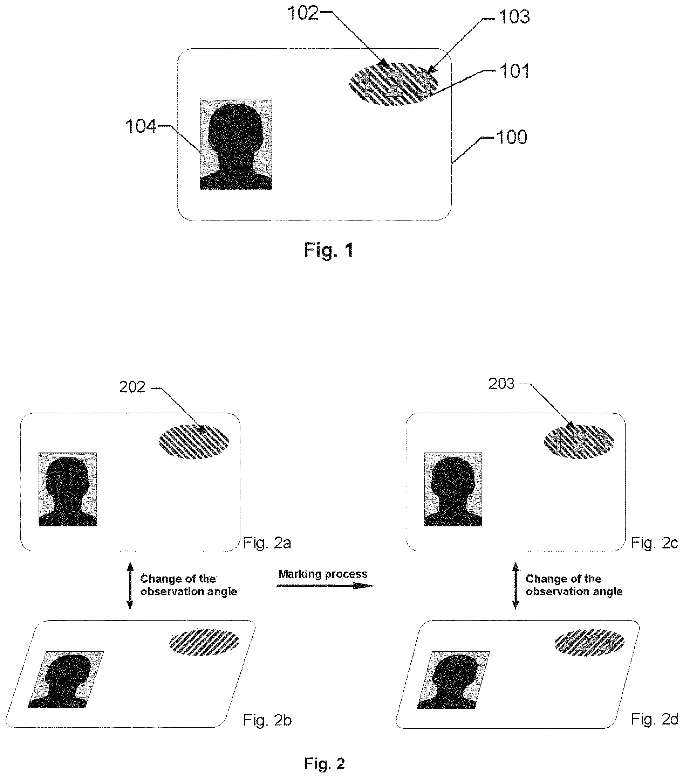

Fig. 1 shows a security document 100 according to the invention that has various security features. For example, a personalization 104 is applied onto the security document 100, as a photograph of the owner of the security document 100. The security document 100 comprises a securing element 101 comprising a marking region 102 into which a laser marking 103 has been introduced. The marking region 102 extends on a portion of the surface of the security document 100 as a geometrical shape - an ellipse. In this embodiment, the laser marking 103 shows alphanumeric characters.

Fig. 2a-2d shows a diagram of the security document 100 in the laminated form, with the securing element before and after the marking process. Fig 2a shows the security document 100 onto which a marking region 202 is deposited, by means of presently available printing techniques, as an optically variable ink layer, exhibiting an optically variable effect. The optically variable effect is based on a change of the printing color when observing at different angles. If one tilts the security document 100 changing the observation angle, this being shown in Fig. 2b, then a color change is visible in the marking region 202. The state of the art knows a lot of color transitions of an optically variable ink, for example, green to blue, magenta to green, golden to green. However, colors of an optically variable ink layer and color transitions thereof are not the subject matter of the present invention. The marking is produced by irradiating the marking region 202 with laser radiation appropriately. Along with an increase of the laser radiation intensity, more and more fraction of an original color in the laser marking 203 is converted into another color. For example, the color may be silver or metallic. It is shown in Fig. 2c. After performing the marking process in the marking region 202, the color of the optically variable ink layer in the marking region 202 has not been changed in this region as well as the color changing effect depending on the observation angle is intact. In turn, the laser marking 203 has been changed into another color demonstrating no change dependent on the observation angle, this being shown in Fig. 2d. When an optically variable ink with an addition of fluorescent pigments and/or dyes is used, then, when illuminating it with the ultraviolet light, for example in the range of 254 nm, 365 nm, or 313 nm, one can see also a security feature in the form of fluorescence of the marking region 206 and fluorescence of the laser marking 207, wherein the laser marking 207 may demonstrate a decreased or increased emission of the fluorescent pigments and/or dyes relative to the intensity of the emission of the marking region 206.

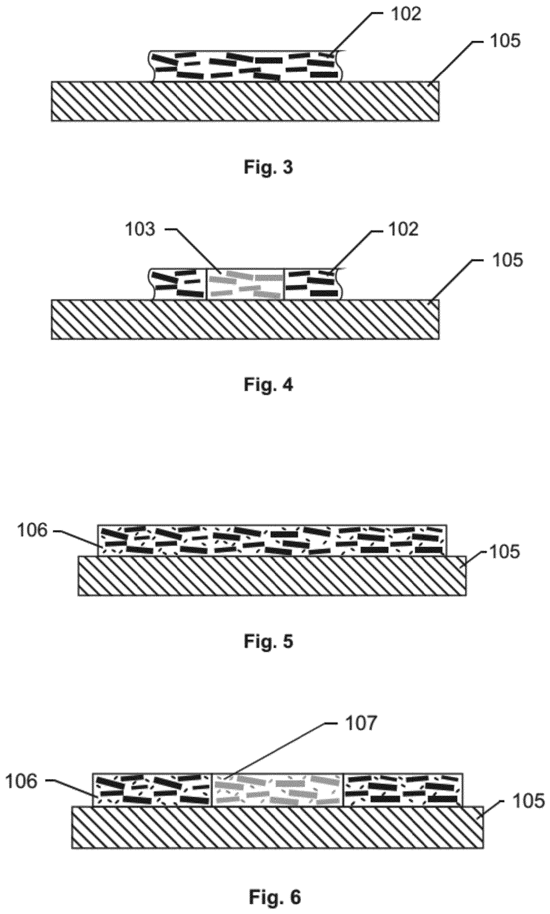

Fig. 3 shows the marking region 102 deposited on a non-laminated substrate 105, i.e., a paper or polymer substrate of the security document 100, for example banknote paper or a polycarbonate sheet. The marking region 102 is printed using one of the best currently available printing methods, for example screen printing, steel engraving, spraying, or pad printing.

The irradiation process of the laser marking 103 may be carried out in such a manner that the laser beam is directed directly onto the marking region 102 and affects the side on which the marking region 102 is located. In this way, the optically variable ink layer present in the marking region 102 is decolorized and its color changing effect is destroyed. During the laser irradiation, the laser marking 103 changes its interference properties and transforms from an original color demonstrating a change dependent on the observation angle into another color demonstrating no change dependent on the observation angle, as shown in Fig. 4. The said another color may be for example a metallic or the color silver. The marking region 102, after irradiating with the laser radiation and producing the laser marking 103, exhibits a uniform intact external structure of the marking region 102. The thickness of the optically variable ink layer in the marking region 102 is not changed, as well as it is not damaged. Its thickness is from 5 to 20 µm, preferably from 5 to 10 µm.

The laser marking 103 is produced for example by means of a UV laser in the wavelength range from 150 nm to 380 nm, visible light lasers in the wavelength range 400 nm to 720 nm, infrared lasers of wavelengths from 700 nm to 1400 nm, or a CO₂ laser of a wavelength 10.6 µm.

### Example 1

Onto a paper substrate having a thickness of 100 µm a marking region 102 of a thickness of 5 - 15 µm was deposited, by means of screen printing, in the form of an optically variable OVI^{®} Magenta - Green ink layer available from SICPA and free of additives changing the absorption spectrum of the printing ink layer in order to adjust it to the wavelength of the used laser without which the marking would not be possible. The marking was produced with an ultraviolet light laser of a wavelength of 355 nm. The irradiation process was carried out at the laser power between 0.1 and 1 W, frequency 50 - 150 kHz, preferably 75-125 kHz, and the speed between 1000 a 2500 mm/s. Under the influence of the laser radiation in the ultraviolet range, a laser marking 103 is produced.

The vast majority of presently issued public documents and banknotes comprise security features exposed under UV radiation. An example of such a security features is fluorescence - and more precisely an emission of visible radiation resulting from illuminating with ultraviolet radiation. Therefore, according to another embodiment of the present invention, the marking region 106 contains, additionally, pigments and/or dyes having fluorescent properties.

The terms "pigments" and "dyes" refer to different substances. A pigment is an insoluble coloring substance having a form of finely ground solid matter, whereas a dye is a coloring substance, that may dissolve in a given medium. The terms "a pigment" and "a dye" refer not only to visible coloring, hence, according to the invention, they may be used for fluorescent substances.

The excitation of an optically variable ink containing pigments of fluorescent properties with the UV radiation of the appropriate wavelength range results in an emission of electromagnetic waves in visible range. For example, fluorescent inks may emit yellow light, green light, blue light, orange light, red light, and a combination thereof. Fluorescent inks are tested with UV lamps emitting light of a wavelength of 254 nm, 313 nm, and 365 nm.

According to the invention, a security document 100 is proposed with a securing element 101 located locally or on the whole surface of the non-laminated substrate 105, comprising a marking region 106 composed of at least one printing ink layer containing optically variable interference pigments and fluorescent pigments and/or dyes and free of additives changing the absorption spectrum of the printing ink layer, the marking region 106 having no other coating layers. The marking region 106 comprises a laser marking 107 applied by laser radiation, that is visually recognizable basing on an irreversible change of interference properties of the printing ink layer containing optically variable interference pigments and fluorescent pigments and/or dyes and on a change, in the laser marking 107, of an original color demonstrating a change dependent on the observation angle into another color demonstrating no change dependent on the observation angle.

Research works of the Inventors devoted to the properties of an optically variable ink containing pigments and/or dyes of fluorescent properties have shown that, when performing the marking of the laser marking 107 in the marking region 106, containing, in addition to optically variable pigments also pigments of fluorescent properties, as shown in Fig. 5, with ultraviolet, visible, or infrared light, not only the color changing effect, depending on the observation angle of the laser marking 107, may be lost, but also a change of the intensity of the light emission from the fluorescent pigments and/or dyes may occur. Fig. 6 illustrates this embodiment. According to the invention, a decrease as well as an increase of the intensity of the emission of the visible radiation may occur, after illuminating with the radiation in the range of 254 nm, 313 nm, or 365 nm.

In order to obtain said change of the light emission from the fluorescent pigments and/or dyes, the ratio by weight of the optically variable pigments to the fluorescent pigments and/or dyes in the marking region 106 should be at least 3:1, preferably 5:1.

### Example 2

Onto a polymer substrate having a thickness of 200 µm, a marking region 106 of a thickness of 5 - 15 µm was deposited, by means of screen printing, in the form of an optically variable OVI^{®} Green - Magenta ink layer available from SICPA and free of additives changing the absorption spectrum of the printing ink layer in order to adjust it to the wavelength of the used laser without which the marking would not be possible, along with an addition of fluorescent pigments and/or dyes where the ratio by weight of the optically variable pigments to the fluorescent pigments and/or dyes is 4:1. The marking was produced with the ultraviolet light laser of a wavelength of 355 nm. The irradiation process was carried out at the laser power between 0.2 and 2 W, frequency 50 - 150 kHz, preferably 75-125 kHz and the speed between 500 and 1500 mm/s. Under the influence of the laser radiation in the ultraviolet range a laser marking 107 is produced exhibiting no optical variability, in favor of perception of a metallic color, and a decrease of the intensity of the emission of the visible radiation after illuminating with the radiation in the range of 254 nm, 313 nm, or 365 nm.

The laser marking 107, according to the invention, demonstrates a decrease of the fluorescence intensity of the fluorescent pigments and/or dyes, if the laser radiation of a wavelength in the range from 150 nm to 380 nm, preferably of a wavelength of 355 nm is used for the marking process.

Alternatively, according to the invention, the laser marking 107, demonstrates an increase of the fluorescence intensity of the fluorescent pigments and/or dyes in the printing ink layer, if the marking is produced with the laser radiation of a wavelength in the range of:
- from 780 nm to 1400 nm, preferably of a wavelength of 1064 and 1062 nm,
- from 430 nm to 700 nm, preferably 532 nm.

### Example 3

Onto a paper substrate having a thickness of 100 µm, a marking region 102 of a thickness of 5 - 15 µm was deposited, by means of screen printing, in the form of an optically variable SICPASTAR^{®} blue - purple ink layer, available from SICPA, and free of additives changing the absorption spectrum of the printing ink layer in order to adjust it to the wavelength of the used laser without which the marking would not be possible, and containing an addition of fluorescent pigments and/or dyes (the ratio by weight of the OVI pigment to the fluorescent addition was 5:1). The laser marking 107 was produced with a visible light laser of a wavelength of 532 nm. The irradiation process was carried out at the laser power between 48 mW - 320 mW, preferably 112 mW - 160 mW, laser repetition frequency 200 kHz and the speed of the laser beam sweeping 2000 mm/s.

### Example 4

Data as in Example 3, wherein the marking of the laser marking 107 was produced with a near-infrared laser of a wavelength of 1064 nm. The irradiation in the near-infrared range was carried out at the laser power between 124 mW - 372 mW, preferably 124 mW - 248 mW, the picosecond laser repetition frequency 200 kHz and the speed of the laser beam sweeping 2000 mm/s.

Under the influence of the laser radiation in the visible light and near-infrared range, a laser marking 107 is produced demonstrating an apparent increase of the fluorescence of the printing ink layer when illuminating it with the ultraviolet light, for example in the range of 254 nm, 313 nm, or 365 nm.

According to the invention, it is possible that the laser marking 107 is composed of, for example, at least one laser marking demonstrating enhanced radiation emission of the fluorescent pigments and/or dyes, and of at least one laser marking demonstrating suppressed radiation emission of the fluorescent pigments and/or dyes visible when illuminating it with the ultraviolet light. Alternatively, the laser marking 107 may be composed of, for example, at least two laser markings demonstrating enhanced radiation emission of the fluorescent pigments and/or dyes, as well as of at least two laser markings demonstrating suppressed radiation emission of the fluorescent pigments and/or dyes. This example is described in more detail below for a laminated substrate 205, however, it is applicable also for a non-laminated substrate 105.

In the case of irradiating the laser markings demonstrating the same intensities of radiation emission of the fluorescent pigments and/or dyes when illuminating them with the ultraviolet light, the irradiations may be performed in separate runs of the laser operation with different laser operating parameters or in the same run of the laser operation with the same laser operating parameters. In turn, in the case of irradiating at least two different laser markings demonstrating different intensities of radiation emission of the fluorescent pigments and/or dyes, the irradiation is carried out in separate runs of the laser operation with different laser operating parameters.

Therefore, the marking process introduces a first level security feature - the decay, visible with the naked eye, of a color demonstrating a change dependent on the observation angle of the laser marking 107, and, simultaneously, a second level security feature - the decrease or increase of the fluorescence in the laser marking 107 under UV radiation, this being a hidden security feature that may be verified by means of a UV lamp.

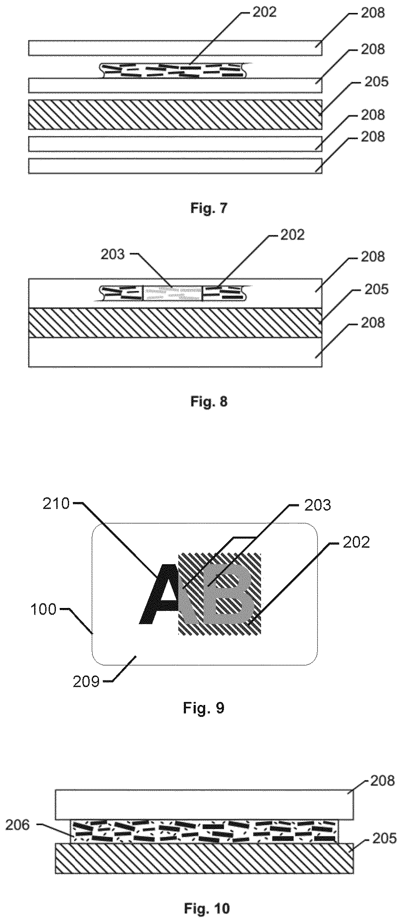

In another embodiment of the invention, a substrate 205 may be produced from a plastic material, for example polycarbonate (PC), polyvinyl chloride (PVC), or polyester. The substrate 205 may be composed of a transparent foil, a white foil or a combination of transparent and white foils. The substrate 205, in the sense of the invention, may be also a paper laminated with PC or PCV foils. Alternatively, onto the substrate 205, at least one coating layer 208 may be deposited. A marking region 202 is deposited onto the substrate 205 or the coating layer 208. This region is formed by a printing ink containing optically variable interference pigments. It may be printed using a currently available printing technique, for example screen printing, steel engraving, spraying, or pad printing. The thickness of the optically variable ink layer in the region 202 is from 5 to 20 µm, preferably from 5 to 10 µm. In the case of depositing the marking region 202 onto the substrate 205, at least one coating layer 208 is applied onto the marking region 202. The coating layer 208 may be of any thickness in the range from 30 to 300 µm or it may be a combination of foils of different thickness. The coating layer may be a foil, preferably a transparent elastic foil of a plastic material, or another layer made from a plastic material, as for example polycarbonate (PC) or polyester. A security document 100 according to present embodiment is produced from a stack of layers and may be composed of at least one coating layer 208 placed one on another, as well as on both sides of the substrate 205. Also, the security document 100 may be composed, for example, from a coating layer 208, a layer of the marking region 202, another coating layer 208, and then substrate 205 and subsequent coating layers 208, as shown in Fig. 7. Such a structure is subjected to a lamination process. The lamination is carried out as in the state of the art. The marking process, in this embodiment, according to the invention, is carried out after the lamination process, within the laminate of the security document 100 produced by binding the layers 202, 208. Subsequently, the above described marking process is carried out in the same manner, i.e., under the laser radiation in the ultraviolet range the effect of the optical variability is destroyed in the marking region 202 by decolorizing the optically variable ink located in the laser marking 203 of the marking region 202. The laser marking 203 changes its interference properties and transforms from an original color demonstrating a change dependent on the observation angle into another color demonstrating no change dependent on the observation angle, as shown in Fig. 8. According to the invention, this another color may be, for example, metallic or the color silver. The laser marking 203 is produced using a UV laser, using the laser radiation of a wavelength in the range from 300 nm to 380 nm, preferably of a wavelength of 355 nm. Due to the subtleness of the interaction of the laser radiation with the optically variable ink layer of the marking region 202, no unwanted stresses are generated that would affect the structure of the laminated security document 100. The use of the UV laser of a wavelength of 355 nm, the radiation energy of which is not absorbed significantly by the coating layer 208, for example of a polycarbonate foil (engraveable or non-engraveable), makes it possible to perform the marking process of the marking region 202 at different depths within the structure of the laminated security document 100. The depth of the optically variable ink layer below the coating layer 208 may be from 50 µm to 300 µm. To that end, each time, for a given structure of the laminated security document 100, appropriate irradiating time, frequency, and translation speed are chosen. The laser marking 203 is visible at any observation angle.

### Example 5

Onto a transparent polycarbonate foil sheet of a thickness of 100 µm, an optically variable ink layer was deposited, by means of screen printing, based on the Gold-Green pigment available from Zhuhai Qun Wang Technology Co., and free of additives changing the absorption spectrum of the printing ink layer in order to adjust it to the wavelength of the used laser without which the marking would not be possible. The sheet has been completed with other foils, including white ones and transparent ones such that to obtain, after the lamination process, the security document 100 in the form of a laminate of a total thickness of approximately 800 µm with a white core and an optically variable ink located at a depth of about 100 - 200 µm from the laminate surface. Then, the laminate has been marked with an ultraviolet light laser of a wavelength of 355 nm. The irradiation process was carried out at the laser power between 0.2 and 1.5 W, frequency 50 - 150 kHz, preferably 75-125 kHz, and the speed between 750 and 1500 mm/s. Under the influence of the laser radiation in the ultraviolet range the laser marking 203 is produced.

In another embodiment of the present invention shown in Fig. 9, in order to obtain a further increase of the protection against counterfeiting, onto a laminated security document 100 a further security feature is added in the form of a second marking 210, creating another variant of the securing element 101. In this case, the securing element 101 is composed of the marking region 202, the laser marking 203, and the second marking 210. In the case of marking the security document 100 with laser radiation of an appropriate wavelength, one may affect not only the marking region 202, but also the laminate region 209. While irradiating the marking region 202 using a first laser radiation of a wavelength in the range of 300 nm - 380 nm, the laser marking 203 is produced and, cumulatively, during the same irradiation step it is possible to produce the second marking 210 in the laminate region 209. The laser marking 203 is visually recognizable due to an irreversible change of interference properties of the optically variable layer induced by the laser beam, and the second marking 210 is visually recognizable due to a local change, induced by the same laser beam, of the color of the security document 100 resulting from transformations and decompositions of the material. For example, the second marking 210 resulting from transforming the material adopts a third color, different from the marking region 202 and/or the laser marking 203. A third color may be an effect of obscuring or blacking the laminate region 209.

In this case, the second marking 210, irradiated with a laser, is consistent with the laser marking 203 in the marking region 202, because it is produced along with the laser marking 203 in the same operation by the same laser pointer, and the system for controlling its operation as well as the same laser operating parameters. Therefore, the presented solution does not require very precise positioning of the printing location of the optically variable ink.

Alternatively, it is also preferable that the process of marking the laser marking 203 in another color, for example the color silver, is produced employing the operating parameters, of the same laser, that are different than those used for the second marking 210.

So, it is possible to use the laser of the appropriate wavelength for marking the marking region 202 by changing the interference properties of the laser marking 203 and, simultaneously, adding other personalized features in the form of the second marking 210, in the laminate region 209, in which the marking region 202 does not occur.

The second marking 210 may be in the form of any geometrical shape and/or a figure and/or a letter and/or a picture. Moreover, most importantly, the second marking 210 and the laser marking 203 may constitute a unity, for example, a matching geometrical shape and/or a figure and/or a letter and/or a picture, and a string of alphanumeric characters. Also, it is possible to create pictures that are not related to each other, such that, firstly, one produces the laser marking 203 and then, in a second process, the second marking 210 is engraved.

Totally, due to the laser processing, four regions are produced of different optical properties: in the marking region 202, the effect of optical variability dominates due to the optically variable pigment layer of interference properties. In the region of the laser marking 203, it is another color demonstrating no change dependent on the observation angle, for example metallic or the color silver. The laser marking 203 is visible at any observation angle. In the case of the second marking 210 the effect of blacking or obscuring dominates. The fourth color is the color of the laminate region 209. Placing, onto the single laminate surface, the security features of four different optical properties increases the security level of the security document 100.

### Example 6

Onto a white PVC foil sheet of a thickness of 200 µm, an optically variable Sicpa Star OVI Blue - Purple ink layer was deposited, by means of screen printing, free of additives changing the absorption spectrum of the printing ink layer in order to adjust it to the wavelength of the used laser without which the marking would not be possible. The sheet has been completed with other foils, including white ones and transparent ones such that to obtain, after the lamination process, the security document 100 in the form of a laminate of a total thickness of approximately 800 µm with a white core and an optically variable ink located at a depth of about 50 - 100 µm from the surface of the coating layer 208 of the laminate. Then, the laminate has been marked with an ultraviolet light laser of a wavelength of 355 nm. The irradiation process was carried out at the laser power between 0.2 and 1.0 W, frequency 50 - 150 kHz, preferably 75-125 kHz, and the speed between 750 and 1500 mm/s. Under the influence of the laser radiation the laser marking 203 and the second marking 210 are produced within the marking region 202 and the laminate region 209, that complement each other.

Totally, due to the laser processing, four regions are produced of different optical properties in the visible radiation: in the marking region 202 the effect of optical variability dominates due to the optically variable pigment layer of interference properties. In the region of the laser marking 203 it is another color demonstrating no change dependent on the observation angle, for example metallic or the color silver. The laser marking 203 is visible at any observation angle. In the case of the second marking 210 the effect of blacking or obscuring dominates. The fourth color is the color of the laminate region 209. Placing, onto the single laminate surface, the security features of four different optical properties increases the security level of the security document 100.

According to another embodiment of the invention, illustrated in Fig. 10, fluorescent pigments and/or dyes were added to an optically variable ink layer in the marking region 206. Therefore, the laminated security document 100 has a securing element 101, that is placed locally or on the whole surface of the security document 100. At least one coating layer 208 is deposited onto this securing element 101, wherein the securing element 101 comprises a marking region 206 composed of at least one printing ink layer containing optically variable interference pigments and fluorescent pigments and/or dyes and free of additives changing the absorption spectrum of the printing ink layer, the marking region 206 comprising a laser marking 207 applied by laser radiation, the laser marking 207 being visually recognizable basing on an irreversible change of interference properties of the printing ink layer containing optically variable interference pigments and fluorescent pigments and/or dyes, and on a transformation, within the laser marking 207, of an original color demonstrating a change dependent on the observation angle into another color demonstrating no change dependent on the observation angle.

The ratios of the used amounts of the optically variable pigment and the fluorescent additive may differ depending on the demanded covering effect of the optically variable ink and the fluorescence intensity, as well as on the types of employed optically variable pigments and fluorescent additives. Preferably, the amount of the optically variable pigment is at least 3 - 5 times bigger than that of the fluorescent additive in the form of the fluorescent pigments and/or dyes.

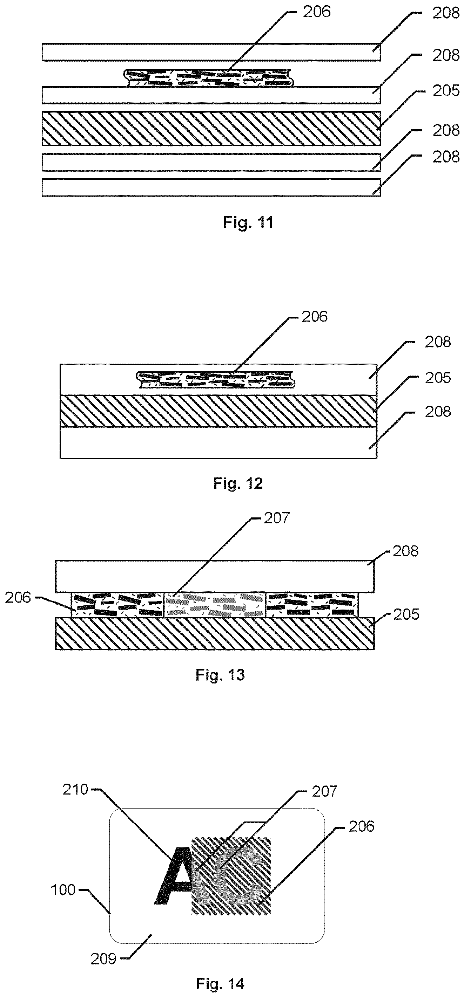

The marking process of the marking region 206 is carried out as in the example above. The substrate 205, may be made from a plastic material, for example polycarbonate (PC), polyvinyl chloride (PVC), or polyester. The substrate 205 may be composed of a transparent foil, a white foil or a combination of transparent and white foils. Also, the substrate 205, in the sense of this invention, may be a paper laminated with plastic materials, for example PC, PCV. Alternatively, at least one coating layer 208 may be applied onto the substrate 205. A marking region 206 is applied onto the substrate 205 or the coating layer 208. This region is a printing ink containing optically variable interference pigments with an addition of fluorescent pigments and/or dyes. It may be printed using a currently available printing technique, for example by screen printing, steel engraving, spraying or pad printing. The thickness of the optically variable ink layer in the region 206, is from 5 to 20 µm, preferably from 5 to 10 µm. In the case the marking region 206 is applied onto the substrate 205, at least one coating layer 208 is applied onto the marking region 206. The coating layer 208 may have a thickness in the range from 30 to 300 µm or it may be a combination of foils of different thicknesses. The coating layer may be a foil, preferably a transparent elastic foil made from a plastic material, or another layer from a plastic material, such as for example polycarbonate (PC) or polyester. A security document 100 according to present embodiment, is produced from a stack of the layers and may be composed of at least one coating layer 208 placed one on another, as well as on both sides of the substrate 205. Also, the security document 100 may be composed, for example, from a coating layer 208, a layer of the marking region 206, another coating layer 208, and then substrate 205 and subsequent coating layers 208, as shown in Fig. 11. Such a structure is subjected to a lamination process. The lamination is carried out as in the state of the art. The marking process, in this embodiment, according to the invention, is carried out after the lamination process, within the laminate of the security document 100 produced by binding the layers 206, 208, shown in Fig. 12. Subsequently, the above described marking process is carried out in the same manner, i.e., under the laser radiation in the ultraviolet range, visible radiation or infrared radiation, in the marking region 206, one loses the color change effect of the laser marking 207 from an original color demonstrating a change dependent on the observation angle into another color demonstrating no change dependent on the observation angle. Additionally, a change of the intensity of the emission of the fluorescent pigments and/or dyes may occur. Fig. 13 illustrates this embodiment. According to the invention, this another color may be, for example, metallic or the color silver. The laser marking 207 is produced using a UV laser, using the laser radiation of a wavelength in the range from 300 nm to 380 nm, preferably of a wavelength of 355 nm. Due to the subtleness of the interaction of the laser radiation with the optically variable ink layer of the marking region 206, no unwanted stresses are generated that would affect the structure of the laminated security document 100. Alternatively, a VIS laser may be used of a wavelength of 532 nm, a picosecond IR laser of a wavelength of 1064 nm, or a fiber laser of a wavelength of 1062 nm, the radiation energy of which is not absorbed significantly by the coating layer 208, for example of a polycarbonate foil (engraveable or non-engraveable), this making it possible to perform the marking process of the marking region 206 at different depths within the structure of the laminated security document 100. The depth of the optically variable ink layer containing fluorescent pigments and/or dyes below the coating layer 208 may be from 50 µm to 300 µm. To that end, each time, for a given structure of the laminated security document 100, appropriate irradiation time, frequency, and translation speed are chosen. The laser marking 207 is visible at any observation angle.

According to the invention, the laser marking 207 is recognizable by a visible decrease or increase of the fluorescence intensity of the fluorescent pigments and/or dyes when illuminating the laser marking 207 with the ultraviolet light.

According to the invention, the laser marking 207 demonstrates a decrease of the fluorescence intensity of the fluorescent pigments and/or dyes if the laser radiation is used for the marking of a wavelength in the range from 150 nm to 380 nm, preferably of a wavelength of 355 nm.

### Example 7

Onto a transparent polycarbonate foil sheet of a thickness of 100 µm, an optically variable SICPA OVI^{®} Magenta - Green ink layer was deposited, by means of screen printing, of a thickness of 5 - 15 µm, and with an addition of fluorescent pigments and/or dyes, where the ratio by weight of the optically variable pigments to the fluorescent pigments and/or dyes is 3:1, and free of additives changing the absorption spectrum of the printing ink layer in order to adjust it to the wavelength of the used laser without which the marking would not be possible. The sheet has been completed with other foils, including white ones and transparent ones such that to obtain, after the lamination process, the security document 100 of a total thickness of approximately 800 µm with a white core and with the optically variable ink with an addition of fluorescent pigments and/or dyes at a depth of about 100 - 200 µm from the laminate surface. Then, the laminate has been marked with an ultraviolet light laser of a wavelength of 355 nm. The irradiation process was carried out at the laser power between 0.2 and 1.5 W, frequency 50 - 150 kHz, preferably 75-125 kHz and the speed between 750 and 1500 mm/s. Under the influence of the laser radiation in the ultraviolet range a laser marking 207 is produced demonstrating, additionally, a decrease of the fluorescence when illuminating it with the ultraviolet light, for example in the range of 365 or 313 nm.

Alternatively, according to this variant of the invention, the laser marking 207 may also demonstrate an increase of the fluorescence intensity of the fluorescent pigments and/or dyes. To produce the laser marking 207 having an observable increase of the fluorescence intensity one uses the laser radiation of a wavelength in the visible radiation range, for example a green laser of a wavelength of 532 nm, or an infrared lasers of wavelengths from 780 to 1400 nm, preferably of a wavelength of 1064 nm or 1062 nm.

### Example 8

Onto a transparent polycarbonate foil of a thickness of 100 µm, an optically variable OVMI^{®} Magenta - Green ink layer was deposited, by means of screen printing, with an addition of fluorescent pigments and/or dyes with a ratio by weight of optically variable pigments to the fluorescent pigments and/or dyes equal to 5:1, and free of additives changing the absorption spectrum of the printing ink layer in order to adjust it to the wavelength of the used laser without which the marking would not be possible. The sheet has been completed with other foils, including white ones and transparent ones such that to obtain, after the lamination process, the security document 100 of a total thickness of approximately 800 µm with a white core and with the optically variable ink located at a depth of about 100 - 200 µm from the laminate surface. Then, the laminate has been subjected to the marking process using a nanosecond fiber near-infrared laser of a wavelength of 1062 nm. The irradiation process in the near-infrared range was carried out at the laser power of 320 mW - 2880 mW, preferably 320 mW - 1600 mW, the fiber laser repetition frequency of 1 MHz and the speed of the laser beam sweeping of 2000 mm/s. Under the influence of the laser radiation in the near-infrared range a laser marking 207 is produced demonstrating an increase of the fluorescence when illuminating it with the ultraviolet light, for example in the range of 365 nm or 313 nm.

### Example 9

Onto a polycarbonate substrate having a thickness of 100 µm, a marking region 202 was deposited, by means of screen printing, of a thickness of 5 - 15 µm in the form of an optically variable SICPA OVI^{®} Green - Magenta ink layer and free of additives changing the absorption spectrum of the printing ink layer in order to adjust it to the wavelength of the used laser without which the marking would not be possible, with an addition of fluorescent pigments and/or dyes with a ratio by weight of the optically variable pigments to the fluorescent pigments and/or dyes of 4:1. The sheet has been completed with other foils, including white ones and transparent ones such that to obtain, after the lamination process, the security document 100 of a total thickness of approximately 800 µm with a white core, and the optically variable ink located at a depth of about. 50 - 150 µm from the laminate surface. The marking process was carried out with a near-infrared laser, preferably of a wavelength of 1064 nm. The irradiation with the near-infrared Nd-Yag laser was carried out at a laser frequency of 50kHz, a laser power in the range of 4.8 W - 6.2 W, preferably 5.3 W-5.7 W. Under the influence of the laser radiation in the near-infrared range a laser marking 207 is produced demonstrating no color changing effect in favor of perception of the color silver and an increase of the intensity of the emission of the visible radiation when illuminating it with the UV radiation in the range of 254 nm, 313 nm, or 365 nm.

Therefore, the laminated security document 100 has a first level security feature - the decay, visible with the naked eye, of the color changing effect of the laser marking 207, as well as a second level security feature - the decrease or increase of the fluorescence in the laser marking 207 under UV radiation, this being a hidden security feature that may be verified by means of a UV lamp.

According to the present embodiment, the marking region 206 and the laser marking 207 exhibit fluorescent properties. In the case of marking the security document 100 with the laser radiation of the appropriate wavelength, one can affect not only the marking region 206, but also the laminate region 209. While irradiating the marking region 206 using the first laser radiation of a wavelength in the range of 300 nm - 380 nm, one produces a laser marking 207 and, cumulatively, during the same irradiation step it is possible to produce a second marking 210 in the laminate region 209. In this case, the securing element 101 is composed of the marking region 206, the laser marking 207, and the second marking 210. So, in the case of producing the second security feature in the form of the second marking 210, the security document 100 has four regions of different optical properties, and an additional security feature in the form of the fluorescence. The laser marking 207 is visually recognizable due to an irreversible change of interference properties of the optically variable layer induced by the laser beam and a change of the fluorescence intensity, the second marking 210 is visually recognizable due to the local change of the color of the security document 100, induced by the same laser beam, and resulting from transformation and decomposition of the material. For example, the second marking 210, due to the material transformation, adopts a third color, different from the marking region 206 and/or the laser marking 207. The third color may be an effect of obscuring or blacking the laminate region 209.

Also, the second marking 210 in the laminate region 209 may be produced, for example, by the laser radiation of a wavelength in the range of 380 nm - 780 nm or by the laser radiation of a wavelength in the range of 780 nm - 1400 nm.

In this case, the second marking 210 irradiated by the laser, is consistent with the laser marking 207 in the marking region 206, because it is produced along with the laser marking 207, in the same operation, by the same laser pointer, and the same system for controlling its operation as well as using the same laser operating parameters. Therefore, the presented solution does not require very precise positioning of the printing location of the optically variable ink with an addition of fluorescent pigments and/or dyes.

Alternatively, it is also preferable that the process of marking the laser marking 207 in another color, for example the color silver, is produced employing the operating parameters, of the same laser, that are different than those used for the second marking 210.

So, it is possible to use the laser of the appropriate wavelength for marking the marking region 206 by changing the interference properties of the laser marking 207 demonstrating, simultaneously, a change of the fluorescence intensity depending on the laser radiation used for performing the marking, and, simultaneously, adding other personalized features in the form of the second marking 210, in the laminate region 209, in which the marking region 206 does not occur. This solution is shown in Fig. 14.

The second marking 210 may be in the form of any geometrical shape and/or a figure and/or a letter and/or a picture. Moreover, the second marking 210 and the laser marking 207 may constitute a unity, for example, a matching geometrical shape and/or a figure and/or a letter and/or a picture, and a string of alphanumeric characters. Also, it is possible to create pictures that are not related to each other, such that, firstly, one produces the laser marking 207 and then, in a second process, the second marking 210 is engraved.

If the marking region 206 is an optically variable ink with an addition of fluorescent pigments and/or dyes, then, by laser processing, six regions are produced of different optical properties: in the marking region 206 the effect of optical variability dominates due to the optically variable pigment layer of interference properties with an addition of fluorescent pigments and/or dyes. In the region of the laser marking 207 it is another color demonstrating no change dependent on the observation angle, for example metallic or the color silver with an addition of fluorescent pigments and/or dyes. The laser marking 207 is visible at any observation angle. For the second marking 210 the effect of blacking or obscuring dominates. The fourth color is the color of the laminate region 209. Additionally, when illuminating with the ultraviolet light, for example in the range of 254 nm, 365 nm or 313 nm, security features are visible in the form of the fluorescence of the marking region 206 and the fluorescence of the laser marking 207. If the laser marking 207 has been produced with a UV laser, then it exhibits a decrease of the fluorescence, whereas if it has been produced with a green laser of a wavelength of 532 nm or an infrared laser, then it exhibits an increase of the fluorescence. With this, the laser marking 207 may demonstrate a decreased or increased emission of the fluorescent pigments and/or dyes in comparison to the intensity of the emission of the marking region 206. Therefore, the securing element 101, under the ultraviolet light, may exhibit different intensities of the light emission from the fluorescent pigments and/or dyes by its different elements that are present in the security document 100. Placing, onto the single laminate surface, the security features of six different optical properties increases the security level of the security document 100.

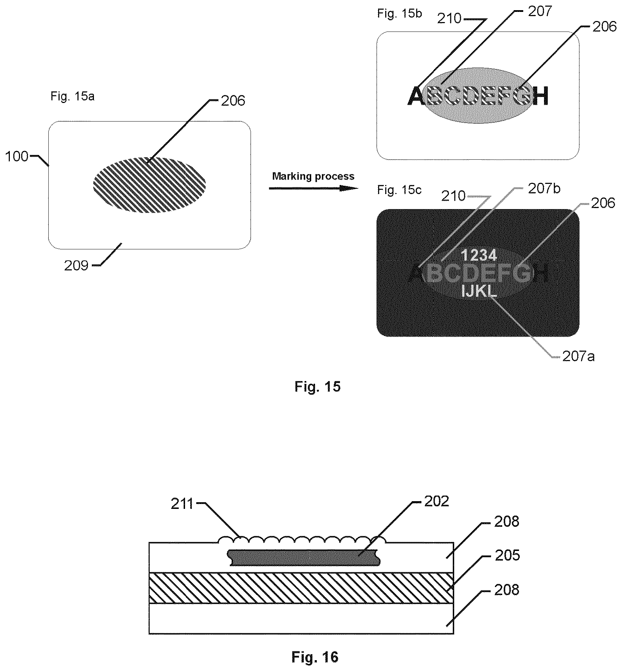

According to another embodiment of the present invention, it is possible to employ, simultaneously, UV, visible light, and infrared lasers, this making possible to obtain, for example, eight different regions of different visual perceptions both in the visible radiation and UV wavelength range. It is shown in Fig. 15. In this case one can obtain two additional regions demonstrating no color changing effect under the visible light and indistinguishable with the naked eye, but exhibiting different intensities under the ultraviolet light of a wavelength 254 nm, 313 nm, or 365 nm.

Fig. 15a shows the security document 100 before the marking process, demonstrating two colors. One of them is the color of the marking region 206 whereas the second color is the color of the laminate region 209. Due to the marking process, the laser marking 207 may cover the whole marking region 206 or the marking region 206 excluding the elements of the marking region 206 that were not subjected to the marking process. The elements of the marking region 206 not subjected to the marking process are shown in Fig. 15b as the letters BCDEFG. In turn, the second marking 210 due to the material transformation adopts a third color, different from the marking region 206 and/or the laser marking 207. When observing under the visible light, a securing element 101 is visible consisting of the color of the marking region 206, the color of the laser marking 207 after performing the marking process, demonstrating no change dependent on the observation angle and of the color of the laminate region 209 and the third color of the second marking 210. The same securing element 101 seen under the ultraviolet light exhibits a different color of the laminate region 209 seen under UV, the fluorescence of the marking region 206, and the fluorescence of the laser marking 207. The laser marking 207 may be composed of, for example, at least one laser marking 207a demonstrating an enhanced radiation emission of the fluorescent pigments and/or dyes, and of at least one laser marking 207b demonstrating a suppressed radiation emission of the fluorescent pigments and/or dyes. This is shown in Fig. 15c, where one can see, under the ultraviolet light, the differences of radiation emission of the fluorescent pigments and/or dyes of individual elements of the securing element 101. The letters BCDEFG of the marking region 206 emit fluorescence more intensively than the region of the laser marking 207b of the decreased radiation emission from the fluorescent pigments and/or dyes and more weakly than the laser marking 207a exhibiting an enhanced emission in comparison to the intensity, shown here as the letters IJKL and the figures 123. It should be noted that the above described intensity differences of the laser marking 207 are visible under UV light. In this case, the irradiation of the laser marking 207a, demonstrating enhanced radiation emission of the fluorescent pigments and/or dyes, as well as the laser marking 207b, demonstrating a suppressed radiation emission of the fluorescent pigments and/or dyes, is carried out in separate runs of the laser operation with different operating parameters. This situation is illustrated with the following example.

### Example 10

Onto a polycarbonate substrate having a thickness of 100 µm, a marking region 206 of a thickness of 5 - 15 µm was deposited, by means of screen printing, in the form of an optically variable SICPASTAR blue - purple ink layer and free of additives changing the absorption spectrum of the printing ink layer in order to adjust it to the wavelength of the used laser without which the marking would not be possible, along with an addition of fluorescent pigments and/or dyes with a ratio by weight of the optically variable pigments to the fluorescent pigments and/or dyes equal to 4:1. The sheet has been completed with other foils, including white ones and transparent ones such that to obtain, after the lamination process, the security document 100 of a total thickness of approximately 800 µm with a white core and the optically variable ink with an addition of fluorescent pigments and/or dyes at a depth of about 50 - 150 µm from the laminate surface.

In the case of marking the region 210 with a near-infrared laser, preferably of a wavelength of 1064 nm, an effect of blacking or obscuring dominates.

The marking of the laser marking 207a demonstrating an increase of the fluorescence was carried out using a near-infrared laser, preferably of a wavelength of 1064 nm. The irradiation with an Nd-Yag laser in the near-infrared range was carried out at the laser frequency of 50 kHz, laser power in the range of 4.8 W - 6.2 W, preferably 5.3 W-5.7 W. Under the influence of the laser radiation in the near-infrared range one produces the laser marking 207a demonstrating no color changing effect in favor of perceiving the color silver and demonstrating an increase of the intensity of the emission of the visible radiation when illuminating it with the UV radiation in the range of 254 nm, 313 nm, or 365 nm.

The marking of the laser marking 207b demonstrating a decrease of the fluorescence was carried out using an ultraviolet light laser, preferably of a wavelength of 355 nm. The irradiation process was carried out at the laser power between 0.2 and 1.5 W, frequency 50 - 150 kHz, preferably 75-125 kHz and the speed between 750 and 1500 mm/s. Under the influence of the laser radiation in the ultraviolet range one produces the laser marking 207b demonstrating a decrease of the fluorescence when illuminating it with the ultraviolet light in the range of 254 nm, 313 nm, or 365 nm.

Alternatively, the laser marking 207 may be composed of, for example, at least two laser markings 207a demonstrating an enhanced radiation emission of the fluorescent pigments and/or dyes, and of at least two laser markings 207b demonstrating a suppressed radiation emission of the fluorescent pigments and/or dyes. In this case, the irradiation of the laser markings demonstrating the same intensity of radiation emission of the fluorescent pigments and/or dyes may be carried out in separate runs of the laser operation with different laser operating parameters or in the same run of the laser operation with the same laser operating parameters.

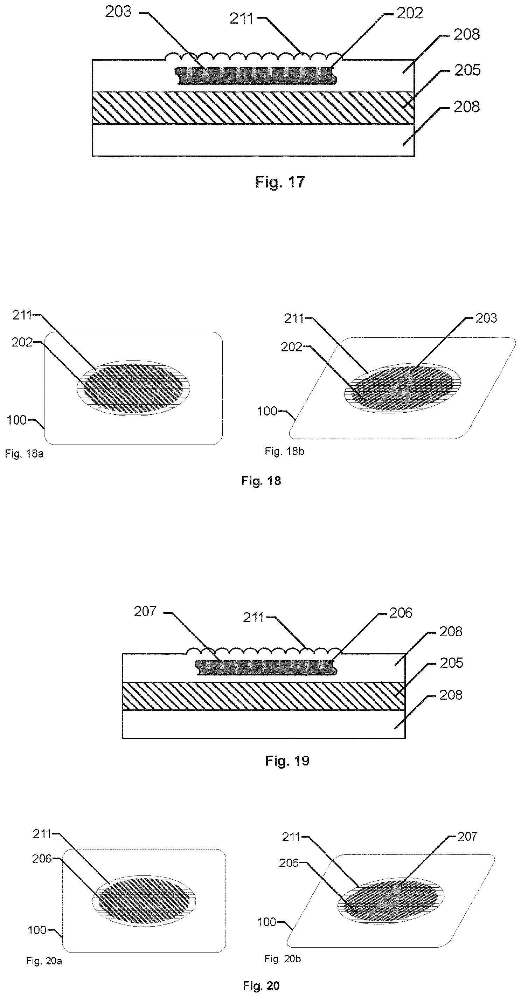

In another embodiment of the invention, shown in Fig. 16, a marking region 202 is located within the structure of a coating layer 208 above a laminated substrate 205. On the surface of the coating layer 208 a lenticular element 211 is created. The lenticular element 211 may be located totally or partially above the marking region 202. As a result of the marking process, carried out using a UV laser of a wavelength in the range from 300 nm to 380 nm, preferably 355 nm, and an appropriately prepared graphical design that is to be the subject matter of the laser marking 203, and taking into consideration the type of the used lens, according to the state of the art knowledge, and the location depth of the optically variable ink layer, a laser marking 203 is created, shown in Fig. 17. Due to the use of the lenses and the appropriate processing of the graphic design, the laser marking 203 is only visible at an appropriate observation angle. Fig 18a shows the security document 100 with a securing element 101 composed of the marking region 202 in the form of a printing ink layer containing optically variable interference pigments and free of additives changing the absorption spectrum of the printing ink layer in order to adjust the absorption spectrum to the wavelength of the used laser without which the marking would not be possible, and a lenticular element 211. In this embodiment, the lenticular element 211 is produced over the marking region 202 within the coating layer 208 (not shown in the drawing), that produces an angle effect, i.e., the laser marking 203 located in the marking region 202 is visible at an appropriate observation angle. If one tilts the security document 100 changing the observation angle, as shown in Fig. 18b, then the laser marking 203 becomes visible in the marking region 202, in a color exhibiting no change dependent on the observation angle. In this case, the method of carrying out the process of marking the laser marking 203 is the same as described for one of the above embodiments of the laminated security document 100.

Also, a possibility exists of using a printing ink layer 206 containing optically variable interference pigments, and, additionally, pigments and/or dyes having fluorescent properties. In such case, the laser marking 207 will also be visible under UV light of a wavelength 254 nm, 313 nm, 365 nm only at an appropriate observation angle.

### Example 11

Onto a transparent polycarbonate foil of a thickness of 100 µm an optically variable SICPASTAR Blue-Purple ink layer was deposited by means of screen printing. The sheet has been completed with other foils, including white ones and transparent ones, such that to obtain, after the lamination process, the security document 100 of a total thickness of approximately 800 µm with a white core and the optically variable ink located at a depth of about 150 - 300 µm from the laminate surface. The lamination process was carried out using lamination plates having a lenticular structure in such locations that the lenticular element produced in the laminated security document 100 totally or partially covers the location of the optically variable ink layer. Then, the laminate has been marked with an ultraviolet light laser of a wavelength of 355 nm. The irradiation process was carried out at the laser power between 0.2 and 1.5 W, frequency 50 - 150 kHz, preferably 75-125 kHz and the speed between 750 and 1500 mm/s. A specially prepared design of the marked picture was used for the irradiating, dedicated to lenses of given characteristics. Under the influence of the laser radiation in the ultraviolet range one produces a laser marking 203 only visible at an appropriate observation angle.

In another embodiment of the invention, shown in Fig. 19, an optically variable ink was used with an addition of fluorescent pigments and/or dyes in a marking region 206. This region is located within the structure of a coating layer 208 over a laminated substrate 205. A lenticular element 211 is produced on the surface of the coating layer 208. The lenticular element 211 may be located totally or partially over the marking region 206. As a result of the marking process, carried out using a UV laser of a wavelength in the range from 300 nm to 380 nm, a visible light laser or an IR laser of a wavelength in the range of from 700 nm to 1400 nm and an appropriately prepared graphic design that is to be the subject mater of the laser marking 207 and taking into consideration the type of the used lens, according to the state of the art knowledge, and the location depth of the optically variable ink layer with an addition of fluorescent pigments and/or dyes, a laser marking 207 is produced, shown in Fig. 20. Due to the use of the lenses and the appropriate processing of the graphic design, the laser marking 207 is only visible at an appropriate observation angle. Fig 20a shows the security document 100 with a securing element 101 composed of the marking region 206 in the form of a printing ink layer containing optically variable interference pigments and free of additives changing the absorption spectrum of the printing ink layer in order to adjust the absorption spectrum to the wavelength of the used laser without which the marking would not be possible, containing an addition of fluorescent pigment(s) and/or dye(s) and a lenticular element 211. In this embodiment, the lenticular element 211 is produced over the marking region 206 within the coating layer 208 (not shown in the drawing), that produces an angle effect, i.e., the laser marking 207 located in the marking region 206 is visible at an appropriate observation angle. If one tilts the security document 100 changing the observation angle, as shown in Fig. 20b, then the laser marking 207 becomes visible in the marking region 206, in a color exhibiting no change dependent on the observation angle. Also, the marking becomes visible under UV light at an appropriate observation angle and depending on the used laser. One can see a decrease or an increase of the fluorescence of the locations of the laser marking 207. In this case, the method of carrying out the process of marking the laser marking 207 is the same as described for one of the above embodiments of the laminated security document 100.

### Example 12

Onto a transparent polycarbonate foil of a thickness of 100 µm, an optically variable SICPASTAR Blue-Purple ink layer was deposited, by means of screen printing, with an addition of fluorescent pigments and/or dyes. The sheet has been completed with other foils, including white ones and transparent ones such that to obtain, after the lamination process, the security document 100 of a total thickness of approximately 800 µm with a white core and the optically variable ink with an addition of fluorescent pigments and/or dyes at a depth of about 150 - 300 µm from the laminate surface. The lamination process was carried out using lamination plates having a lenticular structure in such locations that the lenticular element produced in the laminated security document 100 totally or partially covers the location of the optically variable ink layer with the addition of fluorescent pigments and/or dyes. Then, the laminate has been marked with an ultraviolet light laser of a wavelength of 355 nm. The irradiation process was carried out at the laser power between 0.4 and 2.0 W, frequency 50 - 150 kHz, preferably 75-125 kHz and the speed between 750 and 1500 mm/s. A specially prepared design of the marked picture was used for the irradiating, dedicated to lenses of given characteristics. Under the influence of the laser radiation in the ultraviolet range one produces a laser marking 207 only visible at an appropriate observation angle both in the visible radiation as well as in the UV light.

By changing, during the marking process, such parameters as the laser power, the irradiating time, frequency, translation speed, etc., results of the marking process may be changed in a broad range. In this manner, in addition to modifying, partially or totally, an optically variable printing ink layer or an optically variable printing ink layer with an addition of fluorescent pigments and/or dyes, one can produce, with the laser, also other types of the marking, such as blacking effects on the substrate of the laminated security document 100.

The result of the marking process carried out in the security document 100 depends, significantly, on the structure of the document, and so, on the depth of locating the marking region 102, 106, 202, 206. For every depth, the laser operating parameters must be developed, this, in turn, making a counterfeit more difficult, because even if one has an appropriate laser device, yet complex trials and experiments must be performed on large amounts of documents, such amounts being unavailable to counterfeiters.

## Claims

1. A laminated security document (100) with a securing element (101) located locally or on the whole surface of the security document (100), at least one coating layer (208) being deposited onto the securing element (101), the securing element (101) comprising a marking region (206) composed of at least one printing ink layer containing optically variable interference pigments, the printing ink layer further containing fluorescent pigments and/or fluorescent dyes and being free of additives changing the absorption spectrum of the printing ink layer, the marking region (206) comprising at least one laser marking (207) applied by laser radiation, the laser marking (207) being visually recognizable basing on an irreversible change of interference properties of the printing ink layer containing optically variable interference pigments and fluorescent pigments and/or dyes, and on a transformation, within the laser marking (207), of an original color demonstrating a change dependent on the observation angle into another color demonstrating no change dependent on the observation angle, wherein the laser marking (207) is recognizable basing on a change of the intensity of light emission from the fluorescent pigments and/or fluorescent dyes when illuminating the laser marking (207) with ultraviolet light.

2. A security document (100) according to Claim 1, wherein the ratio by weight of the optically variable pigments to the fluorescent pigments and/or dyes within the marking region (206) is at least 3:1, preferably 5:1.

3. A security document (100) according to Claim 1, wherein the laser marking (207) is recognizable by a visible decrease or increase of the fluorescence intensity of the fluorescent pigments and/or dyes when illuminating the laser marking (207) with ultraviolet light

4. A security document (100) according to Claim 1, wherein the laser marking (207) is composed of at least two laser markings (207a, 207b) of different or the same intensities of the light emission from the fluorescent pigments and/or dyes under ultraviolet light.

5. A security document (100) according to one of the preceding Claims, comprising a lenticular element (211), wherein the lenticular element (211) is located on the surface of the coating layer (208), and the marking region (206) is located entirely or locally below the lenticular element (211) within the structure of the coating layer (208).

6. A security document (100) according to Claim 1, wherein the security document (100) comprises a second marking (210) in the laminate region (209), in which there is no marking region (206), wherein the laser marking (207) is visually recognizable due to an irreversible change of interference properties of the printing ink layer induced by a laser beam, the second marking (210) is visually recognizable due to a local change of the color of the security document (100) induced by the same laser beam.

7. A security document (100) according to Claim 6, wherein the second marking (210) adopts a third color different than that of the marking region (206) and/or the laser marking (207).

8. A security document (100) according to Claim 6-7, wherein the second marking (210) is a visual unity with the laser marking (207).

9. A method for producing a security document (100) with a securing element (101), comprising steps of:
a) applying, onto the security document (100), locally or on the whole surface, a marking region (206) composed of at least one printing ink layer containing optically variable interference piments, the printing ink layer further containing fluorescent pigments and/or fluorescent dyes and free of additives changing the absorption spectrum of the printing ink layer, without which the marking would not be possible;
b) applying at least one coating layer (208) onto the marking region (206);
c) laminating the security document (100) with the marking region (206) and at least one coating layer (208);
e) marking the marking region (206) of the security document (100) by irradiating it with laser radiation and destroying the color changing effect of the at least one laser marking (207) by irreversibly changing the interference properties of the printing ink layer containing optically variable interference pigments and fluorescent pigments and/or dyes located within the laser marking (206), and by transforming, within the laser marking (207), an original color demonstrating a change dependent on the observation angle into another color demonstrating no change dependent on the observation angle, wherein, while irradiating the laser marking (207) with a laser beam, the intensity of the light emission from the fluorescent pigments and/or fluorescent dyes is changed, that is recognizable when illuminating the laser marking (207) with ultraviolet light.

10. A method according to Claim 9, wherein, when illuminating the laser marking (207) with the ultraviolet light, a decrease or increase of the fluorescence intensity of the fluorescent pigments and/or dyes is visible.

11. A method according to Claim 9 or 10, wherein for the laser marking (207) decreasing of the fluorescence intensity of the fluorescent pigments and/or dyes the laser radiation is used of a wavelength in the range from 150 to 380 nm, preferably of a wavelength of 355 nm, whereas for increasing of the fluorescence intensity of the fluorescent pigments and/or dyes the laser radiation is used of a wavelength in the range from 780 to 1400 nm, preferably of a wavelength of 1062 nm or 1064 nm or the laser radiation is used of a wavelength in the range from 430 to 700 nm, preferably of a wavelength of 532 nm.

12. A method according to Claim 9, wherein when illuminating the marking region (206) with a laser beam, a laser marking is produced (207) composed of at least two laser markings (207a, 207b) demonstrating different or the same intensities of the light emission from the fluorescent pigments and/or dyes under ultraviolet light.

13. A method according to Claim 9, wherein the method comprises an additional step d), wherein a lenticular element (211) is produced in the coating layer (208) during the laminating step, that is located locally or entirely above the marking region (206).

14. A method according to at least one of the preceding Claims, wherein when illuminating the marking region (206) with a laser beam, one produces a laser marking (207) and, cumulatively, during this irradiation step one produces, using the same laser beam of the same parameters, a second marking (210) on the laminate region (209).

15. A method according to Claim 14, wherein the operating parameters of the laser producing the laser marking (207) and the second marking (210) on the laminate region (209) are different.

## Patentansprüche

1. Laminiertes Sicherheitsdokument (100) mit einem Sicherheitselement (101), das lokal oder auf der gesamten Oberfläche des Sicherheitsdokuments (100) angeordnet ist, wobei auf das Sicherheitselement (101) mindestens eine Deckschicht (208) aufgebracht ist, wobei das Sicherheitselement (101) einen Markierungsbereich (206) aufweist, der aus mindestens einer Druckfarbenschicht besteht, die optisch variable Interferenzpigmente enthält, wobei die Druckfarbenschicht ferner fluoreszierende Pigmente und/oder fluoreszierende Farbstoffe enthält und frei von Zusätzen ist, die das Absorptionsspektrum der Druckfarbenschicht verändern,
wobei der Markierungsbereich (206) mindestens eine mittels Laserstrahlung aufgebrachte Lasermarkierung (207) aufweist, wobei die Lasermarkierung (207) aufgrund einer irreversiblen Änderung der Interferenzeigenschaften der Druckfarbenschicht, die optisch variable Interferenzpigmente und fluoreszierenden Pigmente und/oder Farbstoffe enthält, und aufgrund einer Umwandlung innerhalb der Lasermarkierung (207) von einer ursprünglichen Farbe, die eine vom Betrachtungswinkel abhängige Veränderung zeigt, in eine andere Farbe, die keine vom Betrachtungswinkel abhängige Veränderung zeigt, visuell erkennbar ist, wobei die Lasermarkierung (207) aufgrund einer Veränderung der Intensität der Lichtemission der fluoreszierenden Pigmente und/oder der fluoreszierenden Farbstoffe bei Beleuchtung der Lasermarkierung (207) mit ultraviolettem Licht erkennbar ist.

2. Sicherheitsdokument (100) nach Anspruch 1, wobei das Gewichtsverhältnis der optisch variablen Pigmente zu den fluoreszierenden Pigmenten und/oder Farbstoffen innerhalb des Markierungsbereichs (206) mindestens 3:1, vorzugsweise 5:1, beträgt.

3. Sicherheitsdokument (100) nach Anspruch 1, wobei die Lasermarkierung (207) durch eine sichtbare Abnahme oder Zunahme der Fluoreszenzintensität der fluoreszierenden Pigmente und/oder Farbstoffe bei Beleuchtung der Lasermarkierung (207) mit ultraviolettem Licht erkennbar ist.

4. Sicherheitsdokument (100) nach Anspruch **1,** wobei die Lasermarkierung (207) aus mindestens zwei Lasermarkierungen (207a, 207b) mit unterschiedlicher oder gleicher Intensität der Lichtemission der fluoreszierenden Pigmente und/oder Farbstoffe unter ultraviolettem Licht besteht.

5. Sicherheitsdokument (100) nach einem der vorhergehenden Ansprüche, aufweisend ein linsenförmiges Element (211), wobei das linsenförmige Element (211) auf der Oberfläche der Deckschicht (208) angeordnet ist und der Markierungsbereich (206) vollständig oder lokal unterhalb des linsenförmigen Elements (211) innerhalb der Struktur der Deckschicht (208) angeordnet ist.

6. Sicherheitsdokument (100) nach Anspruch 1, wobei das Sicherheitsdokument (100) eine zweite Markierung (210) in dem Laminatbereich (209) aufweist, in dem sich kein Markierungsbereich (206) befindet, wobei die Lasermarkierung (207) aufgrund einer durch einen Laserstrahl induzierten irreversiblen Änderung der Interferenzeigenschaften der Druckfarbenschicht visuell erkennbar ist, wobei die zweite Markierung (210) aufgrund einer durch denselben Laserstrahl induzierten lokalen Änderung der Farbe des Sicherheitsdokuments (100) visuell erkennbar ist.

7. Sicherheitsdokument (100) nach Anspruch 6, wobei die zweite Markierung (210) eine dritte Farbe annimmt, die sich von der des Markierungsbereichs (206) und/oder der Lasermarkierung (207) unterscheidet.

8. Sicherheitsdokument (100) nach Anspruch 6-7, wobei die zweite Markierung (210) eine visuelle Einheit mit der Lasermarkierung (207) bildet.

9. Verfahren zur Herstellung eines Sicherheitsdokuments (100) mit einem Sicherheitselement (101), aufweisend die Schritte:
a) lokales oder ganzflächiges Aufbringen, auf das Sicherheitsdokument (100), eines Markierungsbereichs (206), der aus mindestens einer Druckfarbenschicht mit optisch variablen Interferenzpigmenten besteht, wobei die Druckfarbenschicht ferner fluoreszierende Pigmente und/oder fluoreszierende Farbstoffe enthält und frei von Zusätzen ist, die das Absorptionsspektrum der Druckfarbenschicht verändern, und ohne das das Markieren nicht möglich wäre;
b) Aufbringen mindestens einer Deckschicht (208) auf den Markierungsbereich (206);
c) Laminieren des Sicherheitsdokuments (100) mit dem Markierungsbereich (206) und mindestens einer Deckschicht (208);
e) Markieren des Markierungsbereichs (206) des Sicherheitsdokuments (100) durch Bestrahlen mit Laserstrahlung und Zerstören des Farbänderungseffekts der mindestens einen Lasermarkierung (207) durch irreversibles Ändern der Interferenzeigenschaften der Druckfarbenschicht, die optisch variable Interferenzpigmente und fluoreszierende Pigmente und/oder Farbstoffe enthält, innerhalb der Lasermarkierung (206), und durch Transformieren, innerhalb der Lasermarkierung (207), einer ursprüngliche Farbe, die eine vom Betrachtungswinkel abhängige Veränderung zeigt, in eine andere Farbe, die keine vom Betrachtungswinkel abhängige Veränderung zeigt, wobei bei der Bestrahlung der Lasermarkierung (207) mit einem Laserstrahl die Intensität der Lichtemission der fluoreszierenden Pigmente und/oder fluoreszierenden Farbstoffe verändert wird, was bei der Beleuchtung der Lasermarkierung (207) mit ultraviolettem Licht erkennbar ist.

10. Verfahren nach Anspruch 9, wobei bei Beleuchtung der Lasermarkierung (207) mit dem ultravioletten Licht eine Abnahme oder Zunahme der Fluoreszenzintensität der fluoreszierenden Pigmente und/oder Farbstoffe sichtbar ist.

11. Verfahren nach Anspruch 9 oder 10, wobei für die Lasermarkierung (207) zur Abnahme der Fluoreszenzintensität der fluoreszierenden Pigmente und/oder Farbstoffe Laserstrahlung mit einer Wellenlänge im Bereich von 150 bis 380 nm, vorzugsweise mit einer Wellenlänge von 355 nm, verwendet wird, während zur Zunahme der Fluoreszenzintensität der fluoreszierenden Pigmente und/oder Farbstoffe Laserstrahlung mit einer Wellenlänge im Bereich von 780 bis 1400 nm, vorzugsweise mit einer Wellenlänge von 1062 nm oder 1064 nm, oder Laserstrahlung mit einer Wellenlänge im Bereich von 430 bis 700 nm, vorzugsweise mit einer Wellenlänge von 532 nm, verwendet wird.

12. Verfahren nach Anspruch 9, wobei bei Beleuchtung des Markierungsbereichs (206) mit einem Laserstrahl eine Lasermarkierung (207) erzeugt wird, die aus mindestens zwei Lasermarkierungen (207a, 207b) besteht, die unterschiedliche oder die gleichen Intensitäten der Lichtemission der fluoreszierenden Pigmente und/oder Farbstoffe unter ultraviolettem Licht zeigen.

13. Verfahren nach Anspruch 9, wobei das Verfahren einen zusätzlichen Schritt d) aufweist, bei dem während des Laminierungsschritts ein linsenförmiges Element (211) in der Deckschicht (208) erzeugt wird, das lokal oder vollständig über dem Markierungsbereich (206) angeordnet ist.

14. Verfahren nach zumindest einem der vorhergehenden Ansprüche, wobei bei Beleuchtung des Markierungsbereichs (206) mit einem Laserstrahl eine Lasermarkierung (207) erzeugt wird und kumulativ während dieses Bestrahlungsschrittes mit demselben Laserstrahl derselben Parameter eine zweite Markierung (210) auf dem Laminatbereich (209) erzeugt wird.

15. Verfahren nach Anspruch 14, wobei die Betriebsparameter der Laser, die die Lasermarkierung (207) und die zweite Markierung (210) auf dem Laminatbereich (209) erzeugen, unterschiedlich sind.

## Revendications

1. Document de sécurité stratifié (100) comportant un élément de sécurité (101) situé localement ou sur toute la surface du document de sécurité (100), au moins une couche de revêtement (208) étant déposée sur l'élément de sécurité (101), l'élément de sécurité (101) comprenant une zone de marquage (206) composée d'au moins une couche d'encre d'impression contenant des pigments d'interférence optiquement variables, la couche d'encre d'impression contenant en outre des pigments fluorescents et/ou des colorants fluorescents et étant exempte d'additifs modifiant le spectre d'absorption de la couche d'encre d'impression, la zone de marquage (206) comprenant au moins un marquage laser (207) appliqué par rayonnement laser, le marquage laser (207) étant visuellement reconnaissable sur la base d'un changement irréversible des propriétés d'interférence de la couche d'encre d'impression contenant des pigments d'interférence optiquement variables et des pigments et/ou colorants fluorescents, et sur une transformation, dans le marquage laser (207), d'une couleur d'origine présentant un changement dépendant de l'angle d'observation en une autre couleur ne présentant aucun changement dépendant de l'angle d'observation, dans lequel le marquage laser (207) est reconnaissable sur la base d'un changement de l'intensité d'émission lumineuse des pigments fluorescents et/ou colorants fluorescents lors de l'irradiation du marquage laser (207) avec une lumière ultraviolette.

2. Document de sécurité (100) selon la revendication 1, dans lequel le rapport en poids des pigments optiquement variables aux pigments et/ou colorants fluorescents dans la zone de marquage (206) est d'au moins 3:1, de préférence 5:1.

3. Document de sécurité (100) selon la revendication 1, dans lequel le marquage laser (207) est reconnaissable par une diminution ou une augmentation visible de l'intensité de fluorescence des pigments et/ou colorants fluorescents lors de l'irradiation du marquage laser (207) avec une lumière ultraviolette.

4. Document de sécurité (100) selon la revendication 1, dans lequel le marquage laser (207) est composé d'au moins deux marquages laser (207a, 207b) d'intensités différentes ou identiques de l'émission de lumière des pigments et/ou colorants fluorescents sous lumière ultraviolette.

5. Document de sécurité (100) selon une des revendications précédentes, comprenant un élément lenticulaire (211), dans lequel l'élément lenticulaire (211) est situé sur la surface de la couche de revêtement (208) et la zone de marquage (206) est située entièrement ou localement sous l'élément lenticulaire (211) dans la structure de la couche de revêtement (208).

6. Document de sécurité (100) selon la revendication 1, dans lequel le document de sécurité (100) comprend un deuxième marquage (210) dans la région stratifiée (209), dans laquelle il n'y a pas de zone de marquage (206), dans lequel le marquage laser (207) est visuellement reconnaissable en raison d'un changement irréversible des propriétés d'interférence de la couche d'encre d'impression induit par un faisceau laser, le deuxième marquage (210) est visuellement reconnaissable en raison d'un changement local de la couleur du document de sécurité (100) induit par le même faisceau laser.

7. Document de sécurité (100) selon la revendication 6, dans lequel le deuxième marquage (210) adopte une troisième couleur différente de celle de la zone de marquage (206) et/ou du marquage laser (207).

8. Document de sécurité (100) selon la revendication 6 à 7, dans lequel le deuxième marquage (210) est une unité visuelle avec le marquage laser (207).

9. Procédé de fabrication d'un document de sécurité (100) comportant un élément de sécurité (101), comprenant les étapes consistant à :
a) appliquer sur le document de sécurité (100), localement ou sur toute la surface, une zone de marquage (206) composée d'au moins une couche d'encre d'impression contenant des pigments d'interférence optiquement variables, la couche d'encre d'impression contenant en outre des pigments fluorescents et/ou des colorants fluorescents et exempte d'additifs modifiant le spectre d'absorption de la couche d'encre d'impression, sans lesquels le marquage ne serait pas possible ;
b) appliquer au moins une couche de revêtement (208) sur la zone de marquage (206) ;
c) stratifier le document de sécurité (100) avec la zone de marquage (206) et au moins une couche de revêtement (208) ;
e) marquer la zone de marquage (206) du document de sécurité (100) en l'irradiant avec un rayonnement laser et en détruisant l'effet de changement de couleur d'au moins un marquage laser (207) en modifiant de manière irréversible les propriétés d'interférence de la couche d'encre d'impression contenant des pigments d'interférence optiquement variables et des pigments et/ou colorants fluorescents situés à l'intérieur du marquage laser (206) et en transformant, à l'intérieur du marquage laser (207), une couleur d'origine présentant un changement dépendant de l'angle d'observation en une autre couleur ne présentant aucun changement dépendant de l'angle d'observation, dans lequel, lors de l'irradiation du marquage laser (207) avec un faisceau laser, l'intensité de l'émission de lumière provenant des pigments et/ou colorants fluorescents est modifiée, ce qui est reconnaissable lors de l'irradiation du marquage laser (207) avec une lumière ultraviolette.

10. Procédé selon la revendication 9, dans lequel, lors de l'irradiation du marquage laser (207) avec la lumière ultraviolette, une diminution ou une augmentation de l'intensité de fluorescence des pigments et/ou colorants fluorescents est visible.

11. Procédé selon la revendication 9 ou 10, dans lequel pour le marquage laser (207) la diminution de l'intensité de fluorescence des pigments et/ou colorants fluorescents est réalisée avec un rayonnement laser d'une longueur d'onde comprise entre 150 et 380 nm, de préférence d'une longueur d'onde de 355 nm, tandis que pour l'augmentation de l'intensité de fluorescence des pigments et/ou colorants fluorescents, on utilise un rayonnement laser d'une longueur d'onde comprise entre 780 et 1400 nm, de préférence d'une longueur d'onde de 1062 nm ou 1064 nm ou bien on utilise un rayonnement laser d'une longueur d'onde comprise entre 430 et 700 nm, de préférence d'une longueur d'onde de 532 nm.

12. Procédé selon la revendication 9, dans lequel, lors de l'irradiation de la zone de marquage (206) avec un faisceau laser, un marquage laser (207) est produit composé d'au moins deux marquages laser (207a, 207b) présentant des intensités différentes ou identiques de l'émission lumineuse des pigments et/ou colorants fluorescents sous lumière ultraviolette.

13. Procédé selon la revendication 9, dans lequel le procédé comprend une étape supplémentaire d), dans laquelle un élément lenticulaire (211) est produit dans la couche de revêtement (208) pendant l'étape de stratification, qui est situé localement ou entièrement au-dessus de la zone de marquage (206).

14. Procédé selon au moins une des revendications précédentes, dans lequel, lors de l'irradiation de la zone de marquage (206) avec un faisceau laser, on produit un marquage laser (207) et, cumulativement, au cours de cette étape d'irradiation, on produit, en utilisant le même faisceau laser de mêmes paramètres, un deuxième marquage (210) sur la zone stratifiée (209).

15. Procédé selon la revendication 14, dans lequel les paramètres de fonctionnement du laser produisant le marquage laser (207) et le deuxième marquage (210) sur la zone stratifiée (209) sont différents.
